(19) **Europäisches Patentamt**
**European Patent Office**
**Office européen des brevets**

(11) **EP 3 127 086 B1**

(12) **EUROPEAN PATENT SPECIFICATION**

(45) Date of publication and mention
of the grant of the patent:
**17.10.2018 Bulletin 2018/42**

(51) Int Cl.:
**G06T 7/00** (2017.01)       **G06T 7/20** (2017.01)
**G06K 9/46** (2006.01)       **G06T 7/174** (2017.01)
**G06T 7/194** (2017.01)

(21) Application number: **15772348.7**

(22) Date of filing: **31.03.2015**

(86) International application number:
**PCT/FI2015/050226**

(87) International publication number:
**WO 2015/150634 (08.10.2015 Gazette 2015/40)**

(54) **METHOD AND APPARATUS FOR PROCESSING A VIDEO FILE**

VERFAHREN UND VORRICHTUNG ZUR VERARBEITUNG EINER VIDEODATEI

PROCÉDÉ ET APPAREIL DE TRAITEMENT D'UN FICHIER VIDÉO

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.04.2014 CN 201410139040**

(43) Date of publication of application:
**08.02.2017 Bulletin 2017/06**

(73) Proprietor: **Nokia Technologies Oy
02610 Espoo (FI)**

(72) Inventors:
• **WANG, Kongqiao
Beijing 101117 (CN)**
• **LI, Jiangwei
Beijing 100190 (CN)**

(74) Representative: **Berggren Oy, Tampere
Visiokatu 1
33720 Tampere (FI)**

(56) References cited:
**EP-A1- 2 680 567        EP-A2- 1 045 591
US-A1- 2003 108 238       US-A1- 2006 008 118
US-A1- 2011 051 991       US-A1- 2011 051 991**

• **CHIA-KAI LIANG ET AL: "The effect of digital image stabilization on coding performance", INTELLIGENT MULTIMEDIA, VIDEO AND SPEECH PROCESSING, 2004. PROCEEDINGS OF 2004 INTERNATIONAL SYMPOSIUM ON HONG KONG, CHINA OCT. 20-22, 2004, PISCATAWAY, NJ, USA,IEEE, 20 October 2004 (2004-10-20), pages 402-405, XP010801504, DOI: 10.1109/ISIMP.2004.1434085 ISBN: 978-0-7803-8687-7**
• **YAO, B. ET AL.: 'Long-term background reconstruction with camera in motion' 2ND INT. CONGRESS ON IMAGE AND SIGNAL PROCESSING 17 October 2009, TIANJIN, CHINA, pages 268 - 272, XP031553335**
• **BÖHM, J.: 'Multi-image fusion for occlusion-free facade texturing' XXTH ISPRS (INTERNATIONAL SOCIETY FOR PHOTOGRAMMETRY AND REMOTE SENSING) CONGRESS vol. XXXV, 12 July 2004, ISTANBUL, TURKEY, pages 867 - 876, XP055105673**

**Description**

FIELD OF THE INVENTION

Embodiments of the present invention relate to the field of processing a video file, and more specifically relate to a method and apparatus for processing a video file.

BACKGROUND OF THE INVENTION

With constant development of computer technologies, in particular video technologies, split processing of a video file has become one of hot issues to develop. For example, a demand of stripping a background picture from a video file always exists.

Video splitting is a key technology for video processing, with an objective of splitting a moving object from a background. There are two kinds of common splitting methods. The first kind of method is directly estimating and splitting out a moving object from a background through a technology such as motion estimation (ME). This kind of method generally has no limitation on motion of the background. As a result, there is always a splitting accuracy issue for the moving object split from the background. Even refined adjustment is manually performed to an edge of the moving object through an interactive mechanism till achieving an acceptable result, its accuracy cannot be fully guaranteed yet; besides, it needs consumption of mass manual work and thus has a rather low efficient.

Another kind of splitting method is reconstructing the entire background across video frames, thereby splitting a moving object through comparing the reconstructed background and each video frame. A common method is to perform statistical learning modeling on a time axis of the video for each pixel to obtain a reconstructed video background. This method requires that locations of a pixel in the background at different video frames substantially do not change; therefore, it has a strict limitation on the motion of the background. An ideal scenario is a static background. This requires that a user's hand cannot shake when shooting a video, which is rather difficult in practice.

US2003/108238 discloses a voting-based video background mosaicking, wherein for each pixel in a video background mosaic, intensity values associated with corresponding pixels in multiple video frames are collected, and an intensity value associated with the majority of the corresponding pixels is selected. The selected intensity value defines intensity of the pixel in the video background mosaic.

EP1045591 discloses a method for estimating the brightness or other feature values of unchanging or slowly changing regions of an image in a sequence of video images even when the regions is obscured by objects over large portions of the video sequence. A histogram is generated for each image region position over a plurality of image frames in the sequence, and the most frequently occurring value of the image region as indicated by the histogram is selected as representing the unchanging portion of the image.

US2011/051991 discloses a method where background frames can be completed from a collection of frames having foreground objects that are partially obscuring the pixels comprising the background. The special offset of a pixel represented across a collection of frames can be determined based on camera movement data. By determining the relative offset of a pixel represented in a first frame from the same pixel in other frames, pixel values representing a background object can be accumulated to derive a completed background frame.

"The effect of digital image stabilization on coding performance", by Chia-Kai Liang et al, in Proceedings of 2004 International Symposium on Intelligent Multimedia, Video and Speech processing, 20 October 2004, discloses a study of the effect of image stabilization on video coding, where the coding performance of MPEG-4 and H. 264 on the stabilized image sequence is compared to that on the original image sequence. It is shown that image stabilization greatly improves the viewing experience and results in a decrease of bit counts for motion vectors, but the difference in the overall coding performance is minor.

SUMMARY OF THE INVENTION

In order to overcome the above problems in the prior art, the present invention provides the following solutions. According to a first aspect of the present invention, there is provided a method for processing a video file including a plurality of video frames, the method comprising: determining a relative motion vector of each video frame in the plurality of video frames relative to a preceding video frame; spatially aligning the plurality of video frames based on the relative motion vector, so as to determine corresponding pixel points of a same spatial point on each video frame of the plurality of video frames; clustering all pixel points corresponding to said each spatial point to obtain pixel points which are associated with a background; and creating a picture associated with the background of the video file based on the obtained pixel points which correspond to said each spatial point and are associated with the background.

In an alternative implementation of the present invention, the determining a relative motion vector of each video frame in the plurality of video frames relative to a preceding video frame further comprises: dividing the each video frame into a plurality of video blocks; calculating a relative motion vector of each video block in the plurality of video blocks relative to a corresponding video block in the preceding video frame; clustering the plurality of video blocks in the each video frame based on the relative motion vector of the each video block, so as to determine a plurality of video blocks associated with the background in the each video frame; and determining a relative motion vector of the each frame relative to the preceding video frame based on a relative motion vector of each video block in the plurality of video blocks associated with the background in the each frame.

The implementation of the present invention further comprises: dividing the picture and each video frame in the plurality of video frames into a plurality of blocks of a same number; and for each block in the picture, setting a candidate block selection window in each video frame of the plurality of video frames, the candidate block selection window at least covering a block corresponding to the each block in space; selecting, from within the candidate block selection windows, an area with a size identical to the each block and with its content closest to the each block as a candidate block for replacing the each one block; and performing replacement of said block by the determined candidate block.

In an alternative implementation of the present invention, the performing replacement based on the determined candidate block further comprises: obtaining an area covering and exceeding the candidate block by a predetermined area from a video frame where the determined candidate block is located, as a corresponding replacement block; and replacing each block in the picture with the corresponding replacement block, wherein an overlapped portion of two adjacent replacement blocks is rendered based on a color weight of each pixel therein.

In an alternative implementation of the present invention, the determining a relative motion vector of the each frame relative to the preceding video frame based on a relative motion vector of each video block in the plurality of video blocks associated with the background in the each frame comprises: using an average value of relative motion vectors of each video block in the plurality of video blocks associated with the background in the each frame as a relative motion vector of the each frame relative to the preceding video frame.

In an alternative implementation of the present invention, the clustering all pixel points corresponding to said each spatial point is performed based on spatial density distribution of the pixel points in a RGB color space.

In an alternative implementation of the present invention, the clustering all pixel points corresponding to said each spatial point to obtain pixel points which correspond to said each spatial point comprises and are associated with a background further comprises: in a result of the clustering for said each spatial point, using a plurality of pixel points belonging to a maximum cluster as pixel points which correspond to said each spatial point and are associated with the background.

In an alternative implementation of the present invention, the clustering the plurality of video blocks in the each video frame based on the relative motion vector of the each video block, so as to determine a plurality of video blocks associated with the background in the each video frame, further comprises: determining a plurality of video blocks that have been clustered, belong to the maximum cluster, and are adjacent in space, as a plurality of video blocks associated with the background.

In an alternative implementation of the present invention, the relative motion vector includes a horizontal direction motion vector and a vertical direction motion vector.

According to a second aspect of the present invention, there is provided an apparatus for processing a video file including a plurality of video frames, the apparatus comprising: a motion vector determining unit configured to determine a relative motion vector of each video frame in the plurality of video frames relative to a preceding video frame; an aligning unit configured to spatially align the plurality of video frames based on the relative motion vector, so as to determine corresponding pixel points of a same spatial point on each video frame of the plurality of video frames; a pixel clustering unit configured to cluster all pixel points corresponding to said each spatial point to obtain pixel points which are associated with a background; and a picture creating unit configured to create a picture associated with the background of the video file based on the obtained pixel points which correspond to said each spatial point and are associated with the background, the apparatus further comprising a dividing unit, a selecting unit, a candidate block determining unit and a replacing unit as defined in claim 5.

According to a further aspect of the present invention, there is provided a non-transient computer readable medium including a computer program product, the computer program product comprising a machine executable instructions which, when being executed, cause a machine to perform the method according to the first aspect of the present invention.

According to a still further aspect of the present invention, there is provided an apparatus, comprising at least one processor; at least one memory including computer program codes; the at least one memory and the computer program codes being configured to, with the at least one processor, cause the apparatus to perform at least the method according to the first aspect of the present invention.

It would be understood through the description below that when it is desired to obtain a background in a video file as a background picture, even the captured video is jittered, it may also be implemented according to the embodiments of the present invention; besides, the quality of picture may be optimized through various methods provided according to the present invention.

BRIEF DESCRIPTION OF THE ACCOMPANYING DRAWINGS

Through the more detailed description of some embodiments of the present disclosure in the accompanying drawings, the above and other objects, features and advantages of the present disclosure will become more apparent, wherein the same reference generally refers to the same components in the embodiments of the present disclosure.

Fig. 1 shows a flow diagram of a method 100 for processing a video file according to an exemplary embodiment of the present invention;
Fig. 2 shows a flow diagram of a method 200 for determining a relative motion vector between two consecutive frames according to an exemplary embodiment of the present invention;
Fig. 3 shows a flow diagram of a method 300 for further optimizing a quality of the obtained background picture according to another exemplary embodiment of the present invention;
Fig. 4 shows a schematic diagram of aligning the two frames based on a relative motion vector of two consecutive frames according to an exemplary embodiment of the present invention;
Fig. 5 shows a schematic diagram of clustering pixels corresponding to a same spatial point according to an exemplary embodiment of the present invention;
Fig. 6 shows an exemplary picture associated with a background obtained from a method for processing a video file according to an exemplary embodiment of the present invention;
Fig. 7 shows a schematic diagram of performing background quality optimization according to an exemplary embodiment of the present invention;
Fig. 8 shows a method for further optimizing an image quality according to an exemplary embodiment of the present invention;
Fig. 9 shows an optimized exemplary background picture according to an exemplary embodiment of the present invention;
Fig. 10 shows a schematic block diagram of an apparatus 1000 for processing a video file according to an exemplary embodiment of the present invention;
Fig. 11 shows a schematic block diagram of a computer system 1100 applicable for implementing the embodiments of the present invention;
Fig. 12 shows a user terminal 1200 applicable for implementing the embodiments of the present invention;
Fig. 13 schematically shows a configuration diagram of a user terminal shown in Fig. 12.

DETAILED DESCRIPTION OF THE PREFERRED EMBODIMENTS

Hereinafter, the preferred embodiments of the present invention will be described in detail with reference to the accompanying drawings. Although the drawings show the preferred embodiments of the present invention, it should be understood that the present invention may be implemented in various manners but should not be limited by the embodiments illustrated here. On the contrary, these embodiments are provided for making the present invention more thorough and complete and can convey the scope of the present invention completely to those skilled in the art.

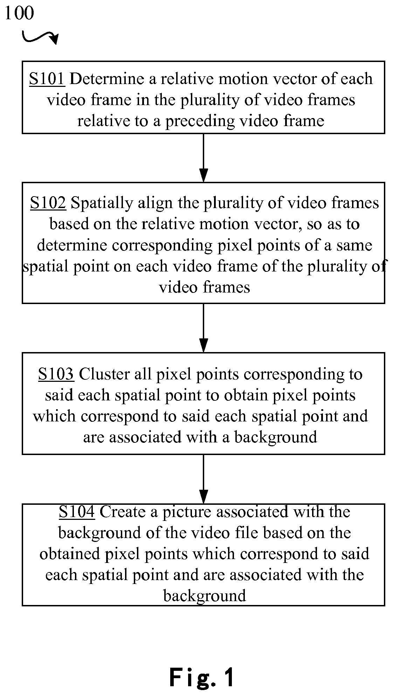

Fig. 1 shows a flow diagram of a method 100 for processing a video file according to an exemplary embodiment of the present invention. The "video file" here may be various kinds and formats of video files, including a plurality of video frames. When processing such video file according to method 100, step S101 is first preformed, in which a relative motion vector of each video frame in the plurality of frames relative to a preceding video frame is determined.

It should be noted that, when capturing a video, because the overall translational movement of the capturing device will not apparently affect video processing such as splitting a background, in order to avoid unnecessary obscuration to the present invention, when mentioning capturing a video content in the context, large motion will not be considered; instead, only small image movement (e.g., jitter of the shooter) is considered. Additionally, a relative motion vector of the video frame may be obtained by weighing a relative motion vector of the video frame in a horizontal direction and a relative motion vector of the video frame in a vertical direction. However, the present invention is not limited thereto.

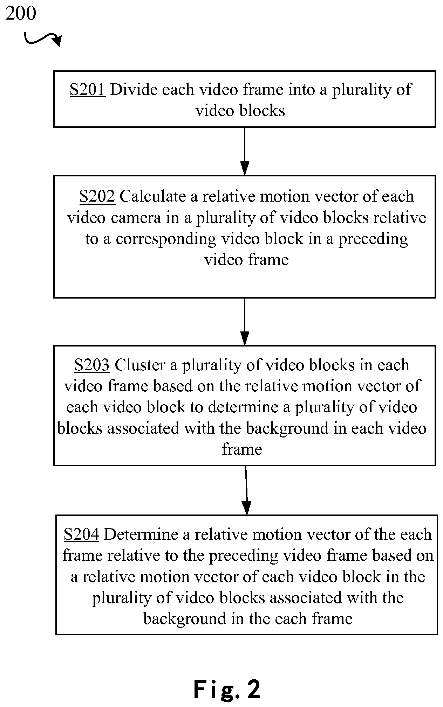

In order to determine a relative motion vector of the each video frame relative to a preceding video frame, with reference to Fig. 2, an exemplary embodiment of the present invention provides a flow diagram of a method 200 for determining a relative motion vector between two consecutive frames. It should be understood that the method as shown in Fig. 2 is not a must, and other methods for determining a relative motion vector between two adjacent frames in a video file in the art may also be applied to step S101 of the method 100. The present invention has no limitation in this regard.

As shown in Fig. 2, the method 200 first comprises step S201 in which each video frame is divided into a plurality of video blocks, e.g., m X n video frames, m and n being positive integers, which may be set as required.

Next, the method 200 proceeds to step S202 to calculate a relative motion vector of each video block of a plurality of video blocks relative to a corresponding video block in a preceding video frame. Generally, a video block, e.g., at row i, column j in a video frame, substantially also corresponds to the video block at row i, column j in the preceding video frame. Calculation of a relative motion vector of corresponding video block in two consecutive frames is shown in the following exemplary manner. However, those skilled in the art should understand that the calculating manner is not limited to the following example, and it may also be performed in any known manner in the prior art.

In order to estimate the relative motion vector between video blocks at corresponding locations in two consecutive video frames, its horizontal and vertical vectors may be estimated, respectively; then, the two vectors are combined to derive the motion vector of the entire frame.

Suppose the horizontal vector is $\overrightarrow{V_x}$ and the vertical vector is $\overrightarrow{V_y}$, while the combined final motion vector is $\overrightarrow{V}$,

then $$V = \sqrt{V_x{}^2 + V_y{}^2} \ (1),$$ and $$\theta = \tan^{-1}\frac{V_y}{V_x} \ (2),$$ where $\theta$ is an included angle between $\overrightarrow{V}$ and the horizontal direction.

Calculation of the horizontal vector and vertical vector will be explained with $\overrightarrow{V_x}$ as an example.

First, horizontal projection histograms of the two corresponding blocks are respectively calculated (the vector dimension of a histogram on the x axis is equal to a width of the block in the horizontal direction; besides, a height of the histogram on the y axis corresponds to an accumulated value of corresponding pixels of the corresponding block along a vertical direction). In this way, suppose two histograms are represented by $F_1(i)$ and $F_2(i)$, respectively, i=0, 1, 2, ......, w-1, w is a width of a corresponding block:
The relevance between the two corresponding blocks may be calculated through the following equation:

$$R(\Delta d) = \frac{\sum_{i=0}^{w-1} F_1(i) \times F_2(i+\Delta d)}{\|F_1(i)\| \times \|F_2(i)\|} \quad (3),$$

$$\text{thereby finding } V_x = \arg(\max_{\Delta d}(R(\Delta d)) \quad (4)$$

In other words, the distances $\Delta$ d of the two blocks staggering in the horizontal direction are constantly tried, finding a certain $\Delta$ d such that the relevance between overlapping areas of the two blocks is the maximum, thereby obtaining the relative motion vector $\overrightarrow{V_x}$ in the horizontal direction. Similarly, $\overrightarrow{V_y}$ may be found, so as to obtain the (overall) relative motion vector $\overrightarrow{V}$ of the video block through equation (1).

Next, the method 200 proceeds to step S203 to cluster a plurality of video blocks in each video frame based on the relative motion vector of each video block to determine a plurality of video blocks associated with the background in each video frame. Because the background is generally static in a video or only has a slight jitter due to shake of the shooter, their motion vectors relative to the preceding video frame should be similar. On this basis, in a preferred implementation of the present invention, a plurality of video blocks that belong to the largest cluster after being clustered and are adjacent in space may act as a plurality of video blocks associated with the background.

Afterwards, the method 200 proceeds to step S204 to determine a relative motion vector of the each frame relative to the preceding video frame based on a relative motion vector of each video block in the plurality of video blocks associated with the background in the each frame. A video frame generally includes a plurality of video blocks associated with the background and a plurality of blocks associated with an object (if any). Apparently, when determining the relative motion vector of a certain frame, all video blocks associated with the background should be considered, rather than video blocks associated with an object.

In an exemplary implementation, an average value of relative motion vectors of each video block in the plurality of video blocks associated with the background in the each frame may act as a relative motion vector of the each frame relative to the preceding video frame. Those skilled in the art should understand that other manners of calculating a relative motion vector of one frame based on a relative motion vector of each video block associated with a background in the frame should also fall within the scope of the present invention. The present invention has no limitation in this regard.

Till now, the method 200 ends.

Refer back to Fig. 1, after a relative motion vector between two consecutive video frames have been determined in step S101, the method 100 proceeds to step S102, in which a plurality of video frames are aligned spatially based on the relative motion vector, so as to determine pixel points corresponding to the same spatial point on each video frame of a plurality of video frames.

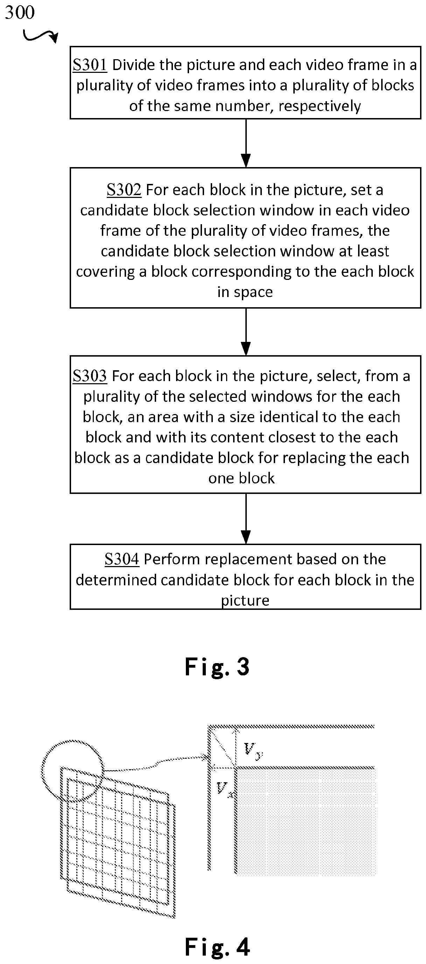

Fig. 4 shows a schematic diagram of aligning the two frames based on a relative motion vector of two consecutive frames according to an exemplary embodiment of the present invention. As shown in Fig. 4, video frames may be aligned from x-axis and y-axis directions based on the above calculated content, and any pixel of the video frame can be

**EP 3 127 086 B1**

calculated. Specifically, for example, a motion vector of each video frame relative to a first frame may be determined based on a relative motion vector between two consecutive video frames. For the ease of discussion, a motion vector relative to the first frame is denoted as an absolute motion vector. Therefore, each video frame may be aligned relative to the first video frame based on this absolute motion vector. For example, after a plurality of video frames of a video stream are aligned, a pixel p(i, j) in the first frame corresponds to the pixel p(i+Vx, j+Vy) of the second frame, Vx and Vy being the motion vectors in the horizontal and vertical directions of the second frame relative to the first frame. Suppose there are n frames in the video, then at any spatial point, there exist n pixels from each video frame, respectively, the n pixels being pixel points corresponding to the same spatial point.

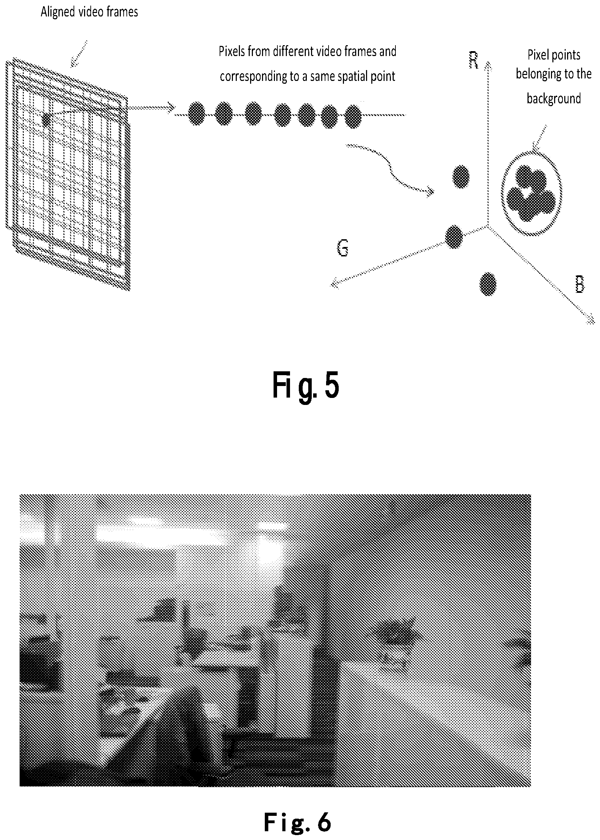

Next, the method 100 proceeds to step S103 to cluster all pixel points corresponding to each spatial point to obtain pixel points that correspond to each spatial point and are associated with the background. Fig. 5 shows a schematic diagram of clustering pixels corresponding to a same spatial point according to an exemplary embodiment of the present invention. As shown in Fig. 5, for example, such clustering may be performed based on spatial density distribution of pixel points in a RGB color space. Through analyzing the spatial density distribution of these pixels in the RGB color space, it may be regarded that pixels clustered at a same location and belonging to the maximum spatial density are pixels associated with the background, while other pixels belong to pixels associated with a moving object. In other words, in a result of the clustering for each spatial point, a plurality of pixel points belonging to the largest cluster may be optionally regarded as pixel points that correspond to each spatial point and associated with the background. However, those skilled in the art should understand that, the above clustering manner is only illustrative, not intended to limit the scope of the present invention. Through other clustering manners in the prior art, for example, through determining whether the pixel points conform to Gaussian distribution, which pixels belong to pixels associated with the background may also be determined. The present invention is not limited in this regard.

Till now, the method 100 has obtained all pixel points associated with the background in each video frame of a video file. The method 100 proceeds to step S104 to create a picture associated with the background of the video file based on the obtained pixel points which correspond to said each spatial point and are associated with the background. For example, a picture associated with the background of the video file may be created by averaging the pixels associated with the background. Those skilled in the art should also understand that averaging is only an exemplary method. Other methods of obtaining a background picture based on a plurality of background pixel points in the prior art are likewise applicable to the present invention. Fig. 6 shows an exemplary picture associated with the background, which is derived from the method for processing a video file according to an exemplary embodiment of the present invention.

Till now, the method 100 ends.

It may be seen that even with slight displacement such as jitter during shooting, the method for processing a video file according to the embodiments of the present invention can also strip the background from a video file so as to satisfy various needs of users.

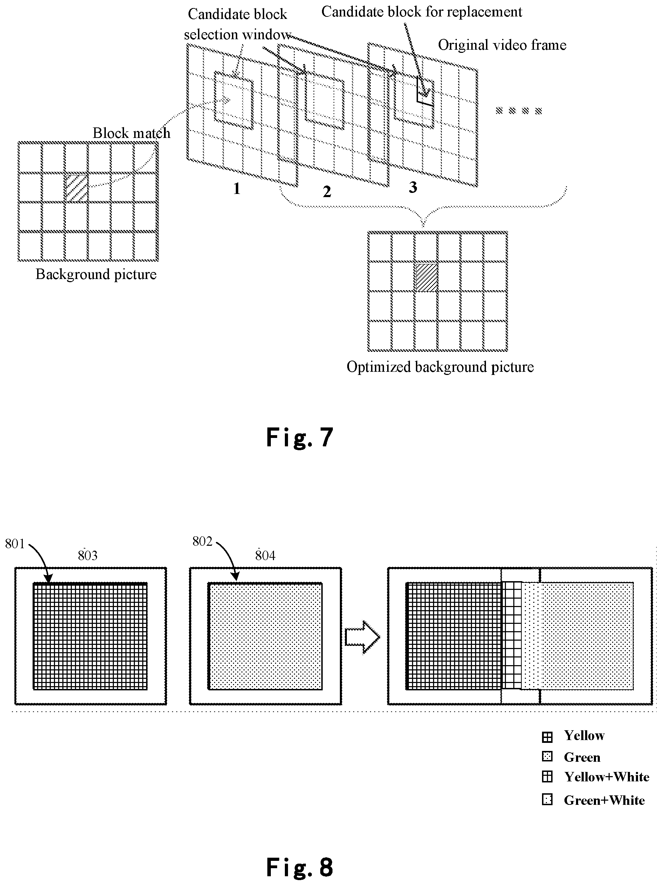

Now, refer to Fig. 3. Fig. 3 shows a flow diagram of a method 300 for further optimizing a quality of the obtained background picture according to another embodiment of the present invention. As shown in Fig. 3, in step S301, the created picture and each video frame in a plurality of video frames are divided into a plurality of blocks of the same number, respectively. The plurality of blocks as divided may similarly be m × n arrays as needed, where m and n are positive integers. In order to better illustrate the method 300, a specific example is provided with reference to Fig. 7. Fig. 7 shows a schematic diagram of performing background quality optimization according to an exemplary embodiment of the present invention. As shown in Fig. 7, the background picture to be optimized is first divided into 6 × 4 blocks as an example (6 × 4 is only a schematic division for the convenience of posing an example. In practice, the number of divided blocks will be far greater than this division according to the actual needs).

Refer back to method 300. Next, it proceeds to step S302 of setting a candidate block selection window in each video frame of the plurality of video frames for each block in the picture, the candidate block selection window at least covering a block corresponding to the each block in space.

It should be noted that the corresponding block in space here refers to a block at a corresponding row (e.g., the same row) and a corresponding column (e.g., the same column) after the picture or video frame is divided into a plurality of blocks of the same number in the same manner. For the block at row 2, column 3 in the picture shown in Fig. 7, when seeking a candidate block for replacing it, for example, selection may be performed in each frame (frame 1, 2, 3 ...) among a plurality of frames included in the original video file. As shown in Fig. 7, a candidate block selection window may be set in each video frame during selecting, which window should at least cover a block corresponding to the each block in space (e.g., the block at row 2, column 3 of each video frame in a video stream); considering possible factors such as jitter during shooting the video, the candidate block selection window may also cover a part of other blocks joined to the corresponding lock in space. For example, as shown in Fig. 7, the candidate block selection window covers the entire block at row 2, column 3 of each video frame, and a part of blocks at row 1 columns 2-4, row 2, columns 2 and 4, and row3, columns 1-3. Those skilled in the art would appreciate that the size and specific location of the candidate block selection window may be pre-determined based on experience or expertise.

Return to the method 300. Next, it proceeds to step S303 of for each block in the picture, selecting, from a plurality of the selected windows for the each block, an area with a size identical to the each block and with its content closest to the each block as a candidate block for replacing the each one block. As shown in Fig. 7, in a plurality of candidate block selection windows corresponding to the block at row 2, column 3 in the picture, an area with a size identical to the each block and with its content closest to the block is searched. For example, Fig. 7 shows that this area is a top right corner area of the selection window of the video frame 3; then, this area acts as a candidate block for replacing the block at row 2, column 3 in the picture.

Here, determination regarding whether the video contents are close may be performed by calculating the relevance therebetween using a method similar to the abovementioned with reference to equation (3). It should be noted likewise that other methods of calculating relevancy in the art are also applicable here. The present invention has no limitation in this regard.

Finally, the method 300 proceeds to step S304 of replacing based on the determined candidate block for each block in the picture. One replacing method is directly replacing the corresponding block on the picture with the determined candidate block.

The background picture after being processed through the method 300 is very clear because all of its compositions are selected from the original video frame. The good image quality can better satisfy user needs.

Now, refer to Fig. 8, in which a method for further optimizing an image quality according to an exemplary embodiment of the present invention is presented. Specifically, when each block in the picture is replaced using a determined candidate block, for example, an area covering and exceeding the candidate block by a predetermined area may be obtained from a video frame where the determined candidate block is located, acting as a corresponding replacement block. As shown in Fig. 8, video blocks 801 and 802 represent two adjacent candidate blocks as determined for replacement. According to the exemplary embodiments of the present invention, upon replacement, an area covering the two blocks and having an area exceeding the two blocks by a certain threshold may be obtained from the frames where 801 and 802 are respectively located to act as the corresponding replacement block. The predetermined threshold here may be set and adjusted as required. Generally, the area acting as a replacement block is generally a candidate block (also referred to as a valid area) together with its surrounding area (also referred to as an edge area). For example, in Fig. 8, 803 covering 801 and its surrounding area is used as a replacement block, and 804 covering 802 and its surrounding area is used as another replacement block. Those skilled in the art should understand that the size of the predetermined area may be predetermined based on experience or expertise.

In this way, each block in the picture is replaced with the corresponding replacement block, wherein an overlapped portion of two adjacent replacement blocks may be rendered for example based on a color weight value of each pixel therein. For the ease of illustration, in Fig. 8, the determined candidate block 801 is represented in yellow (i.e., valid area); the determined candidate block 802 is represented in green (i.e., valid area), while their respective peripheral areas are represented in white (i.e., edge area). After replacement, the edge area of the replacement block 803 will overlap the green area of the replacement block 804, while the edge area of the replacement block 804 will overlap the yellow area of the replacement block 803. For these overlapped areas, it may be regarded that the pixel point (green) of the replacement block 804 contributes more to the background picture than the pixel point (white) area of the replacement block 803; while the pixel point (yellow) of the replacement block 803 contributes more to the background picture than the pixel point (white) area of the replacement block 804. If there is an overlap between the yellow area and the green area, it may be believed that their contributions to the background picture are identical, thereby obtaining the final background picture. It is apparent that the periphery area should not be too large to interfere in the formation of the valid area picture.

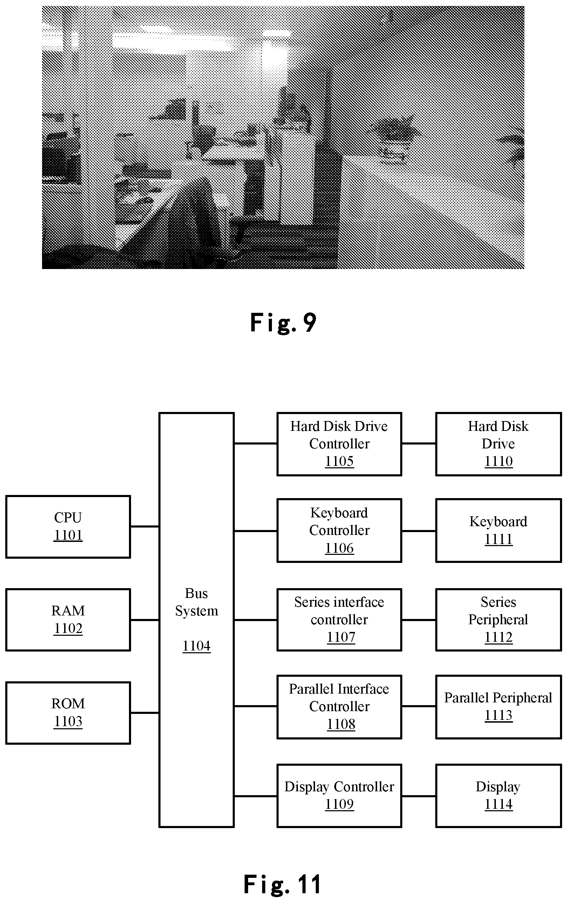

A background picture after such "fade-in fade-out" processing reduces the occurrence of "stitching breaks" in the joined portion of adjacent video blocks, which further optimizes the image quality. For example, Fig. 9 shows an exemplary background picture optimized according to an exemplary embodiment of the present invention.

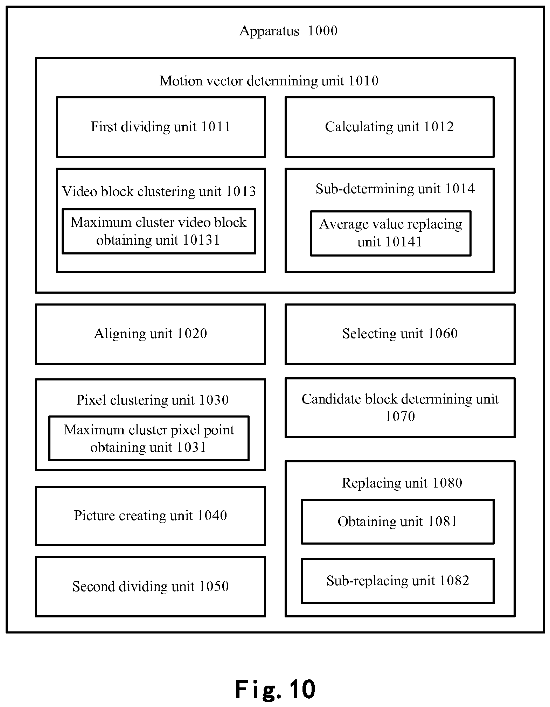

Next, refer to Fig. 10, in which a schematic block diagram of an apparatus 1000 for processing a video file according to an exemplary embodiment of the present invention is further described, the video file including a plurality of video frames.

As shown in the figure, the apparatus 1000 comprises a motion vector determining unit 1010, an aligning unit 1020, a pixel clustering unit 1030, and a picture creating unit 1040, wherein the motion vector determining unit 1010 is configured to determine a relative motion vector of each video frame in the plurality of video frames relative to a preceding video frame; the aligning unit 1020 is configured to spatially align the plurality of video frames based on the relative motion vector, so as to determine corresponding pixel points of a same spatial point on each video frame of the plurality of video frames; the pixel clustering unit 1030 is configured to cluster all pixel points corresponding to said each spatial point to obtain pixel points which correspond to said each spatial point and are associated with a background; and the picture creating unit 1040 is configured to create a picture associated with the background of the video file based on the obtained pixel points which correspond to said each spatial point and are associated with the background.

In an optional embodiment of the present invention, the motion vector determining unit 1010 further comprises: a first dividing unit 1011 configured to divide the each video frame into a plurality of video blocks; a calculating unit 1012

configured to calculate a relative motion vector of each video block in the plurality of video blocks relative to a corresponding video block in the preceding video frame; a video block clustering unit 1013 configured to cluster the plurality of video blocks in the each video frame based on the relative motion vector of the each video block, so as to determine a plurality of video blocks associated with the background in the each video frame; and a sub-determining unit 1014 configured to determine a relative motion vector of the each frame relative to the preceding video frame based on a relative motion vector of each video block in the plurality of video blocks associated with the background in the each frame.

In an optional embodiment of the present invention, the apparatus 1000 may further comprise: a second dividing unit 1050 configured to divide the picture and each video frame in the plurality of video frames into a plurality of blocks of a same number; and a selecting unit 1060 configured to, for each block in the picture, set a candidate block selection window in each video frame of the plurality of video frames, the candidate block selection window at least covering a block corresponding to the each block in space; a candidate block determining unit 1070 configured to select, from a plurality of the selected windows for the each block in the picture, an area with a size identical to the each block and with its content closest to the each block as a candidate block for replacing the each one block; and a replacing unit 1080 configured to, for each block in the picture, perform replacement based on the determined candidate block.

In an optional embodiment of the present invention, the replacing unit 1080 further comprises: an obtaining unit 1081 configured to obtain an area covering and exceeding the candidate block by a predetermined area from a video frame where the determined candidate block is located, as a corresponding replacement block; and a sub-replacing unit 1082 configured to replace each block in the picture with the corresponding replacement block, wherein an overlapped portion of two adjacent replacement blocks is rendered based on a color weight of each pixel therein.

In an optional embodiment of the present invention, the sub-determining unit 1014 comprises: an average value replacing unit 10141 configured to use an average value of relative motion vectors of each video block in the plurality of video blocks associated with the background in the each frame as a relative motion vector of the each frame relative to the preceding video frame.

In an optional embodiment of the present invention, the clustering all pixel points corresponding to said each spatial point is performed based on spatial density distribution of the pixel points in a RGB color space.

In an optional embodiment of the present invention, the pixel clustering unit 1030 further comprises: a maximum cluster pixel point obtaining unit 1031 configured to, in a result of the clustering for said each spatial point, use a plurality of pixel points belonging to a maximum cluster as pixel points which correspond to said each spatial point and are associated with the background.

In an optional embodiment of the present invention, the video block clustering unit 1013 further comprises: a maximum cluster video block obtaining unit configured to determine a plurality of video blocks that have been clustered, belong to the maximum cluster, and are adjacent in space, as a plurality of video blocks associated with the background.

In an optional embodiment of the present invention, the relative motion vector includes a horizontal direction motion vector and a vertical direction motion vector.

It should be noted that for the ease of illustration, the apparatus 1000 in Fig. 10 shows a second dividing unit 1050, a selecting unit 1060, a candidate block determining unit 1070, and a replacement unit 1080. However, it should be understood that these units are not essential, but alternative or optional. Likewise, although the apparatus 1010 in Fig. 10 shows that the motion vector determining unit 1010 comprises a first dividing unit 1011, a calculating unit 1012, a video block clustering unit 1013, and a sub-determining unit 1014, the units 1011-1014 are optional, and the scope of the present invention is not limited in this regard. Moreover, the term "unit" used here may be either a hardware module or a software unit module. Correspondingly, the apparatus 1000 may be implemented through various manners. For example, in some embodiments, the apparatus 1000 may be implemented partially or completely by software and/or firmware, e.g., implemented as a computer program product embodied on the computer readable medium. Alternatively or additionally, the apparatus 1000 may be implemented partially or completely based on hardware, e.g., implemented as an integrated circuit (IC), an application-specific integrated circuit (ASIC), a system on chip (SOC), a field programmable gate array (FPGA), etc. The scope of the present invention is not limited in this regard.

The method and apparatus for processing a video file according to the present invention may be implemented on various kinds of electronic devices. For example, it may be implemented on a computer. Fig. 11 shows a schematic block diagram of a computer system 1100 applicable for implementing the embodiments of the present invention. For example, the computer system 1100 as shown in Fig. 11 may be used to implement various components of the apparatus 1000 for processing a video file as described above, or used to solidify or implement various steps of methods 100-300 for processing a video file as described above.

As shown in Fig. 11, the computer system may comprise a CPU (Central Processing Unit) 1101, a RAM (Random Access Memory) 1102, a ROM (Read Only Memory) 1103, a system bus 1104, a hard disk controller 1105, a keyboard controller 1106, a serial interface controller 1107, a parallel interface controller 1108, a display controller 1109, a hard disk 1110, a keyboard 1111, a serial peripheral device 1112, a parallel peripheral device 1113 and a display monitor 1114. Among these components, what coupled to the system bus 1104 are the CPU 1101, the RAM 1102, the ROM 1103, the hard disk controller 1105, the keyboard controller 1106, the serial interface controller 1107, the parallel controller 1108 and the display controller 1109. The hard disk 1110 is coupled to the hard disk controller 1105; the keyboard 1111 is coupled to the keyboard controller 1106; the serial peripheral device 1112 is coupled to the serial interface controller 1107; the parallel peripheral device 1113 is coupled to the parallel interface controller 1108; and the monitor 1114 is coupled to the monitor controller 1109. It should be understood that the structural block diagram in Fig. 11 is illustrated only for illustration purpose, and is not intended to limit the invention. In some cases, some devices can be added or reduced as required.

As shown above, the system 1000 may be implemented as a pure hardware, e.g., chip, ASIC, SOC, etc. The above hardware may be integrated into the computer system 1100. Besides, the embodiments of the present invention may also be implemented in a form of a computer program product. For example, methods 100-300 described with reference to Figs. 1-3 may be implemented through a computer program product. The computer program product may be stored in the RAM 1104, ROM 1104, or hard disk 1110 as shown in Fig. 11, and/or any appropriate storage medium, or downloaded onto the computer system 1100 from an appropriate location through the network. The computer program product may include a computer code portion comprising program instructions that may be executed by an appropriate processing device (e.g., CPU 1101 as shown in Fig. 11). The computer program instructions at least may include an instruction for implementing any step in methods 100-300.

The spirit and principle of the present invention have been illustrated with reference to a plurality of preferred embodiments. The method, system, and apparatus for processing a video file according to the present invention have various advantages over the prior art. For example, it may strip a background picture in the case of jitter in capturing a video file. Moreover, after corresponding processing, a better picture quality can be obtained so as to meet various demands of users.

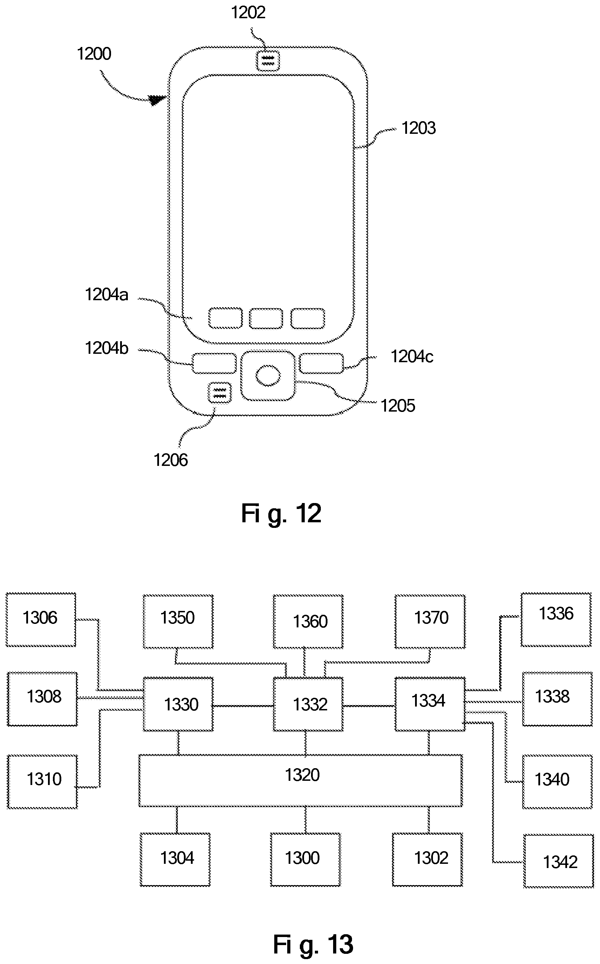

The electronic device for implementing the method and apparatus for processing a video file according to the present invention may also include a user terminal 1200 as shown in Fig. 12.

The user terminal 1200 comprises a loudspeaker or earphone 1202, a microphone 1206, a touch screen 1203, and a set of keys 1204 that may comprise a virtual key 1204a, soft keys 1204b, 1204c, and joystick 1205 or other kind of navigation input devices.

Fig. 13 schematically shows a schematic diagram of configuration of the user terminal shown in Fig. 12.

Now, Fig. 13 will be referenced to describe internal components, software and protocol structure of the user terminal 1200. The user terminal 1200 has a controller 1300 in charge of an overall operation of the user terminal and may be implemented by any commercially available CPU ("Central Processing Unit"), a DSP ("Digital Signal Processor") or any other electrical programmable logical devices. The controller 1300 has an associated electronic memory 1302, such as a RAM memory, a ROM memory, an EEPROM memory, a flash disk or any other combination. The memory 1302 is controlled by the controller 1300 for various purposes, one of which is for storing program instructions and data for various software in the user terminal. The software comprises a real-time operating system 1320, a driver for a man-machine interface (MMI) 1334, an application processor 1332, and various applications. The applications may comprise a message text editor 1350, a handwriting recognition (HWR) application 1360, and various other applications 1370, e.g., voice call, video call, sending and receiving short messaging services (SMS) messages, multimedia messaging service (MMS) or electronic mails, web browsing, instant message transceiving application, phone book application, calendar application, control panel application, camera application, one or more video games, notebook application, etc. It should be noted that two or more of the above applications may be executed as a same application.

MMI 1334 further comprises one or more hardware controllers that, together with the MMI driver, cooperate with a first display 1336/ 1203, a keypad 1338/ 1204, and various other I/O devices (such as a microphone, a loudspeaker, a vibrator, a ring generator, a LED indicator, etc.). As is known, the user may operate the user terminal through such formed man-machine interface.

The software may also comprise various modules, protocol stacks, drivers, and the like, which are together marked as 1330 for providing communication services (such as transmission, network and connectivity) for an RF interface 1306 and optionally for a Bluetooth interface 1308 and/or IrDA interface 1310, for local connectivity. The RF interface 1306 comprises an internal or external antenna and an appropriate radio circuit for establishing and maintaining a radio link to a base station. As is known to those skilled in the art, the radio circuit comprises a series of analog and digital electronic components, which, together, form a radio receiver and transmitter. These components, for example, include a bandpass filter, an amplifier, a mixer, a local oscillator, a low-pass filter, an AD/DA converter, etc.

The user terminal may also comprise an SIM card 1304 and an associated readout machine. As is known, the SIM card 1304 includes a processor and a local work and data memory.

It should be noted that embodiments of the present invention may be implemented by hardware, software or a combination of the software and combination. The hardware part may be implemented using a dedicated logic; the software part may be stored in the memory, executed by an appropriate instruction executing system, e.g., a microprocessor or a dedicatedly designed hardware. A person of normal skill in the art may understand that the above apparatus and method may be implemented using a computer-executable instruction and/or by being included in processor control code. In implementation, such code is provided on a carrier medium such as magnetic disk, CD- or DVD-ROM, a programmable memory such as read-only memory (firmware), or a data carrier such as optical or electronic signal carrier.

In one example, there is provided a non-transient computer readable medium for a computer program product, the computer program product comprising machine-executable instructions which, when being executed, cause the machine to execute: determining a relative motion vector of each video frame in the plurality of video frames relative to a preceding video frame; spatially aligning the plurality of video frames based on the relative motion vector, so as to determine corresponding pixel points of a same spatial point on each video frame of the plurality of video frames; clustering all pixel points corresponding to said each spatial point to obtain pixel points which correspond to said each spatial point and are associated with a background; and creating a picture associated with the background of the video file based on the obtained pixel points which correspond to said each spatial point and are associated with the background.

In another example, there is provided an apparatus, comprising: at least one processor; and at least one memory including computer program codes; the at least one memory and the computer program codes being configured to, with the at least one processor, cause the apparatus to perform at least: spatially aligning the plurality of video frames based on the relative motion vector, so as to determine corresponding pixel points of a same spatial point on each video frame of the plurality of video frames; clustering all pixel points corresponding to said each spatial point to obtain pixel points which correspond to said each spatial point and are associated with a background; and creating a picture associated with the background of the video file based on the obtained pixel points which correspond to said each spatial point and are associated with the background.

The apparatus and its modules of the present invention can be implemented by a very large scale integrated circuit or gate array, semiconductor such as logic chips and transistors, or hardware circuitry of programmable hardware devices like field programmable gate arrays and programmable logic devices, or implemented by various kinds of processor-executable software, or implemented by a combination of the above hardware circuits and software, such as firmware.

It should be noted that although several units or sub-units of the apparatus have been mentioned in the above detailed description, such division is merely exemplary and not mandatory. In fact, according to embodiments of the present invention, the features and functions of two or more modules described above may be embodied in one module. On the contrary, the features and functions of one module described above may be embodied by a plurality of modules.

In addition, although in the accompanying drawings, operations of the method of the present invention are described in specific order, it is not required or suggested these operations be necessarily executed in the specific order or the desired result should be achieved by executing all illustrated operations. On the contrary, the steps depicted in the flowcharts may change their execution order. Additionally or alternatively, some steps may be omitted, a plurality of steps may be combined into one step for execution, and/or one step may be decomposed into a plurality of steps for execution.

Although the present invention has been described with reference to several embodiments, it is to be understood the present invention is not limited to the embodiments disclosed herein.

The present invention is intended to embrace various modifications and equivalent arrangements comprised in the scope of the appended claims. The scope of the appended claims accords with the broadest interpretation, thereby embracing all such modifications and equivalent structures and functions.

**Claims**

1. A method for processing a video file including a plurality of video frames, the method comprising:

    determining (S101, 200) a relative motion vector of each video frame in the plurality of video frames relative to a preceding video frame;
    spatially aligning (S102) the plurality of video frames based on the relative motion vector, so as to determine corresponding pixel points of a same spatial point on each video frame of the plurality of video frames;
    clustering (S103) all pixel points corresponding to each spatial point to obtain pixel points which are associated with a background;
    creating (S104) a picture associated with the background of the video file based on the obtained pixel points which correspond to each spatial point and are associated with the background; **characterized by**
    dividing (S301) the picture and each video frame in the plurality of video frames into a plurality of blocks of a same number; and
    for each block in the picture,
    setting (S302) a candidate block selection window in each video frame of the plurality of video frames, the candidate block selection window at least covering a block corresponding to the block in the picture in space;
    selecting (S303), from within the candidate block selection windows, an area with a size identical to the block in the picture and with its content closest to the block in the picture as a candidate block for replacing said block;

and

performing (S304) replacement of the block in the picture by the determined candidate block.

2. The method according to claim 1, wherein the determining (S101, 200) a relative motion vector of each video frame in the plurality of video frames relative to a preceding video frame further comprises:

dividing (S201) each video frame into a plurality of video blocks; calculating (S202) a relative motion vector of each video block in the plurality of video blocks relative to a corresponding video block in the preceding video frame;

clustering (S203) the plurality of video blocks in each video frame based on the relative motion vector of each video block, so as to determine a plurality of video blocks associated with the background in each video frame; and

determining (S204) a relative motion vector of each frame relative to the preceding video frame based on a relative motion vector of each video block in the plurality of video blocks associated with the background in each frame.

3. The method according to claim 1, wherein the clustering (S103) all pixel points corresponding to each spatial point is performed based on spatial density distribution of the pixel points in a RGB color space.

4. The method according to claim 1, wherein the clustering (S103) all pixel points corresponding to each spatial point to obtain pixel points which are associated with a background further comprises:

in a result of the clustering for said each spatial point, using a plurality of pixel points belonging to a maximum cluster as pixel points which correspond to each spatial point and are associated with the background.

5. An apparatus (1000) for processing a video file including a plurality of video frames, the apparatus (1000) comprising:

a motion vector determining unit (1010) configured to determine a relative motion vector of each video frame in the plurality of video frames relative to a preceding video frame;

an aligning unit (1020) configured to spatially align the plurality of video frames based on the relative motion vector, so as to determine corresponding pixel points of a same spatial point on each video frame of the plurality of video frames;

a pixel clustering unit (1030) configured to cluster all pixel points corresponding to each spatial point to obtain pixel points which are associated with a background;

a picture creating unit (1040) configured to create a picture associated with the background of the video file based on the obtained pixel points which correspond to each spatial point and are associated with the background;

**characterized by** comprising:

a dividing unit (1050) configured to divide the picture and each video frame in the plurality of video frames into a plurality of blocks of a same number; and

a selecting unit (1060) configured to, for each block in the picture, set a candidate block selection window in each video frame of the plurality of video frames, the candidate block selection window at least covering a block corresponding to the block in the picture in space;

a candidate block determining unit (1070) configured to, for each block in the picture, select, from within the candidate block selection windows, an area with a size identical to the block in the picture and with its content closest to the block in the picture as a candidate block for replacing said block; and

a replacing unit (1080) configured to, for each block in the picture, perform replacement of the block in the picture by the determined candidate block.

6. The apparatus (1000) according to claim 5, wherein the motion vector determining unit (1010) further comprises:

a further dividing unit (1011) configured to divide each video frame into a plurality of video blocks;

a calculating unit (1012) configured to calculate a relative motion vector of each video block in the plurality of video blocks relative to a corresponding video block in the preceding video frame;

a video block clustering unit (1013) configured to cluster the plurality of video blocks in each video frame based on the relative motion vector of each video block, so as to determine a plurality of video blocks associated with the background in each video frame; and

a sub-determining unit (1014) configured to determine a relative motion vector of each frame relative to the preceding video frame based on a relative motion vector of each video block in the plurality of video blocks associated with the background in each frame.

7. The apparatus (1000) according to claim 5, wherein the replacing unit (1080) further comprises:

an obtaining unit (1081) configured to obtain an area covering and exceeding the candidate block by a predetermined area from a video frame where the determined candidate block is located, as a corresponding replacement block; and
a sub-replacing unit (1082) configured to replace each block in the picture with the corresponding replacement block, wherein an overlapped portion of two adjacent replacement blocks is rendered based on a color weight of each pixel therein.

8. The apparatus (1000) according to claim 6, wherein the sub-determining unit (1014) comprises:
an average value replacing unit (10141) configured to use an average value of relative motion vectors of each video block in the plurality of video blocks associated with the background in each frame as a relative motion vector of each frame relative to the preceding video frame.

9. The apparatus (1000) according to claim 5, wherein the clustering all pixel points corresponding to each spatial point is performed based on spatial density distribution of the pixel points in a RGB color space.

10. The apparatus (1000) according to claim 5, wherein the pixel clustering unit (1030) further comprises:
a maximum cluster pixel point obtaining unit (1031) configured to, in a result of the clustering for each spatial point, use a plurality of pixel points belonging to a maximum cluster as pixel points which are associated with the background.

11. The apparatus (1000) according to claim 6, wherein the video block clustering unit (1013) further comprises:
a maximum cluster video block obtaining unit (10131) configured to determine a plurality of video blocks that have been clustered, belong to the maximum cluster, and are adjacent in space, as a plurality of video blocks associated with the background.

12. The (1000) apparatus according to claim 5, wherein the relative motion vector includes a horizontal direction motion vector and a vertical direction motion vector.

13. A non-transient computer readable medium including a computer program product, the computer program product comprising machine executable instructions which, when being executed, cause a machine to perform the method according to any one of Claims 1 to 4.


**Patentansprüche**

1. Verfahren zur Verarbeitung einer Videodatei, die eine Mehrzahl von Videoframes umfasst, wobei das Verfahren umfasst:

Bestimmen (S101, 200) eines relativen Bewegungsvektors jedes Videoframes in der Mehrzahl von Videoframes in Bezug auf einen vorhergehenden Videoframe;
räumliches Abstimmen (S102) der Mehrzahl von Videoframes basierend auf dem relativen Bewegungsvektor, um entsprechende Pixelpunkte eines gleichen Raumpunktes auf jedem Videoframe der Mehrzahl von Videoframes zu bestimmen;
Clustern (S103) aller Pixelpunkte, die jedem Raumpunkt entsprechen, um Pixelpunkte zu erlangen, die mit einem Hintergrund assoziiert sind;
Erzeugen (S104) eines Bildes, das mit dem Hintergrund der Videodatei assoziiert ist, basierend auf den erlangten Pixelpunkten, die jedem Raumpunkt entsprechen und mit dem Hintergrund assoziiert sind;
**gekennzeichnet durch**
Teilen (S301) des Bildes und jedes Videoframes in der Mehrzahl von Videoframes in eine Mehrzahl von Blöcken einer gleichen Anzahl; und für jeden Block im Bild
Festlegen (S302) eines Kandidatenblockauswahlfensters in jedem Videoframe der Mehrzahl von Videoframes, wobei das Kandidatenblockauswahlfenster mindestens einen Block abdeckt, der dem Block im Bild im Raum entspricht;
Auswählen (S303) von innerhalb der Kandidatenblockauswahlfenster eines Bereichs mit einer Größe, die mit dem Block im Bild und mit seinem dem Block im Bild am nächsten gelegenen Inhalt identisch ist, als einen Kandidatenblock zum Ersetzen des Blocks; und

Durchführen (S304) von Ersetzung des Blocks im Bild durch den bestimmten Kandidatenblock.

2. Verfahren nach Anspruch 1, wobei das Bestimmen (S101, 200) eines relativen Bewegungsvektors jedes Videoframes in der Mehrzahl von Videoframes in Bezug auf einen vorhergehenden Videoframe ferner umfasst:

Teilen (S201) jedes Videoframes in eine Mehrzahl von Videoblöcken;
Berechnen (S202) eines relativen Bewegungsvektors jedes Videoblocks in der Mehrzahl von Videoblöcken in Bezug auf einen entsprechenden Videobock im vorhergehenden Videoframe;
Clustern (S203) der Mehrzahl von Videoblöcken in jedem Videoframe basierend auf dem relativen Bewegungsvektor jedes Videoblocks, um eine Mehrzahl von Videoblöcken zu bestimmen, die mit dem Hintergrund in jedem Videoframe assoziiert sind;
Bestimmen (S204) eines relativen Bewegungsvektors jedes Frames in Bezug auf den vorhergehenden Videoframe basierend auf einem relativen Bewegungsvektor jedes Videoblocks in der Mehrzahl von Videoblöcken, die mit dem Hintergrund in jedem Frame assoziiert sind.

3. Verfahren nach Anspruch 1, wobei das Clustern (S103) aller Pixelpunkte, die jedem Raumpunkt entsprechen, basierend auf räumlicher Dichteverteilung der Pixelpunkte in einem RGB-Farbraum durchgeführt wird.

4. Verfahren nach Anspruch 1, wobei das Clustern (S103) aller Pixelpunkte, die jedem Raumpunkt entsprechen, zum Erlangen von Pixelpunkten, die die mit einem Hintergrund assoziiert sind, ferner umfasst:
Verwenden einer Mehrzahl von Pixelpunkten, die zu einem maximalen Cluster gehören, als Pixelpunkte, die jedem Pixelpunkt entsprechen und mit dem Hintergrund assoziiert sind, in einem Ergebnis des Clusterns für jeden solchen Raumpunkt.

5. Vorrichtung (1000) zum Verarbeiten einer Videodatei, die eine Mehrzahl von Videoframes umfasst, wobei die Vorrichtung (1000) umfasst:

eine Bewegungsvektorbestimmungseinheit (1010), die zum Bestimmen eines relativen Bewegungsvektors jedes Videoframes in der Mehrzahl von Videoframes in Bezug auf einen vorhergehenden Videoframe konfiguriert ist;
eine Abstimmeinheit (1020), die so konfiguriert ist, dass sie die Mehrzahl von Videoframes basierend auf dem relativen Bewegungsvektor räumlich abstimmt, um entsprechende Pixelpunkte eines gleichen Raumpunktes auf jedem Videoframe der Mehrzahl von Videoframes zu bestimmen;
eine Pixelclustereinheit (1030), die so konfiguriert ist, dass sie alle Pixelpunkte, die jedem Raumpunkt entsprechen, clustert, um Pixelpunkte zu erlangen, die mit einem Hintergrund assoziiert sind;
eine Bilderzeugungseinheit (1040), die so konfiguriert ist, dass sie ein Bild, das mit dem Hintergrund der Videodatei assoziiert ist, basierend auf den erlangten Pixelpunkten erzeugt, die jedem Raumpunkt entsprechen und mit dem Hintergrund assoziiert sind;
**dadurch gekennzeichnet, dass** sie umfasst:

eine Teilungseinheit (1050), die zum Teilen des Bildes und jedes Videoframes in der Mehrzahl von Videoframes in eine Mehrzahl von Blöcken einer gleichen Anzahl konfiguriert ist; und
eine Auswähleinheit (1060), die so konfiguriert ist, dass sie für jeden Block im Bild ein Kandidatenblockauswahlfenster in jedem Videoframe der Mehrzahl von Videoframes festlegt, wobei das Kandidatenblockauswahlfenster mindestens einen Block abdeckt, der dem Block im Bild im Raum entspricht;

eine Kandidatenblockbestimmungseinheit (1070), die so konfiguriert ist, dass sie für jeden Block im Bild von innerhalb der Kandidatenblockauswahlfenstern einen Bereich mit einer Größe, die mit dem Block im Bild und mit seinem dem Block im Bild am nächsten gelegenen Inhalt identisch ist, als einen Kandidatenblock zum Ersetzen des Blocks auswählt; und
eine Ersetzungseinheit (1080), die so konfiguriert ist, dass sie für jeden Block im Bild Ersetzung des Blocks im Bild durch den bestimmten Kandidatenblock durchführt.

6. Vorrichtung (1000) nach Anspruch 5, wobei die Bewegungsvektorbestimmungseinheit (1010) ferner umfasst:

eine weitere Teilungseinheit (1011), die zum Teilen jedes Videoframes in eine Mehrzahl von Videoblöcken konfiguriert ist;

eine Berechnungseinheit (1013), die zum Berechnen eines relativen Bewegungsvektors jedes Videoblocks in der Mehrzahl von Videoblöcken in Bezug auf einen entsprechenden Videoblock im vorhergehenden Videoframe konfiguriert ist;

einen Videoblockclustereinheit (1012), die so konfiguriert ist, dass sie die Mehrzahl von Videoblöcken in jedem Videoframe basierend auf dem relativen Bewegungsvektor jedes Videoblocks clustert, um eine Mehrzahl von Videoblöcken zu bestimmen, die mit dem Hintergrund in jedem Videoframe assoziiert sind; und

eine Unter-Bestimmungseinheit (1014), die so konfiguriert ist, dass sie einen relativen Bewegungsvektor jedes Frames in Bezug auf den vorhergehenden Videoframe basierend auf einem relativen Bewegungsvektor jedes Videoblocks in der Mehrzahl von Videoblöcken bestimmt, die mit dem Hintergrund in jedem Frame assoziiert sind.

7.  Vorrichtung (1000) nach Anspruch 5, wobei die Ersetzungseinheit (1080) ferner umfasst:

eine Erlangungseinheit (1081), die so konfiguriert ist, dass sie einen Bereich, der den Kandidatenblock abdeckt und um einen vorbestimmten Bereich überschreitet, aus einem Videoframe, in dem sich der bestimmte Kandidatenblock befindet, als einen entsprechenden Ersetzungsbock erlangt; und

eine Unter-Ersetzungseinheit (1082), die zum Ersetzen jedes Blocks im Bild durch den entsprechenden Ersetzungsblock konfiguriert ist, wobei ein überlappender Abschnitt zweier benachbarter Ersetzungsblöcke basierend auf einem Farbgewicht jedes Pixels darin wiedergegeben wird.

8.  Vorrichtung (1000) nach Anspruch 6, wobei die Sub-Bestimmungseinheit (1014) ferner umfasst:
eine Mittelwertersetzungseinheit (10141), die so konfiguriert ist, dass sie einen Mittelwert von relativen Bewegungsvektoren jedes Videoblocks in der Mehrzahl von Videoblöcken, die mit dem Hintergrund in jedem Frame assoziiert sind, als einen relativen Bewegungsvektor jedes Frames in Bezug auf den vorhergehenden Videoframe verwendet.

9.  Vorrichtung (1000) nach Anspruch 5, wobei das Clustern aller Pixelpunkte, die jedem Raumpunkt entsprechen, basierend auf räumlicher Dichteverteilung der Pixelpunkte in einem RGB-Farbraum durchgeführt wird.

10. Vorrichtung (1000) nach Anspruch 5, wobei die Pixelclustereinheit (1030) ferner umfasst:
eine Einheit zum Erlangen von Pixelpunkten eines maximalen Clusters (1031), die so konfiguriert ist, dass sie in einem Ergebnis des Clusterns für jeden Raumpunkt eine Mehrzahl von Pixelpunkten, die zu einem maximalen Cluster gehören, als Pixelpunkte verwendet, die mit dem Hintergrund assoziiert sind.

11. Vorrichtung (1000) nach Anspruch 6, wobei die Videoblockclustereinheit (1013) ferner umfasst:
eine Einheit zum Erlangen von Videoblöcken eines maximalen Clusters (10131), die so konfiguriert ist, dass sie eine Mehrzahl von Videoblöcken, die geclustert wurden, zum maximalen Cluster gehören und räumlich benachbart sind, als eine Mehrzahl von Videoblöcken bestimmt, die mit dem Hintergrund assoziiert sind.

12. Vorrichtung (1000) nach Anspruch 5, wobei der relative Bewegungsvektor einen Bewegungsvektor in horizontaler Richtung und einen Bewegungsvektor in vertikaler Richtung umfasst.

13. Nicht-transientes computerlesbares Medium, das ein Computerprogrammprodukt umfasst, wobei das Computerprogrammprodukt maschinenausführbare Anweisungen umfasst, die bei Ausführung eine Maschine zum Durchführen des Verfahrens nach einem der Ansprüche 1 bis 4 veranlassen.

**Revendications**

1.  Procédé de traitement d'un fichier vidéo comprenant une pluralité de trames vidéo, le procédé comprenant les étapes suivantes :

déterminer (S101, 200) un vecteur de mouvement relatif de chaque trame vidéo dans la pluralité de trames vidéo par rapport à une trame vidéo précédente ;

aligner spatialement (S102) la pluralité de trames vidéo sur la base du vecteur de mouvement relatif, de manière à déterminer les points de pixels correspondants d'un même point spatial sur chaque trame vidéo de la pluralité de trames vidéo ;

regrouper (S103) tous les points de pixels correspondant à chaque point spatial pour obtenir des points de pixels qui sont associés à un arrière-plan ;

créer (S104) une image associée à l'arrière-plan du fichier vidéo sur la base des points de pixels obtenus qui correspondent à chaque point spatial et qui sont associés à l'arrière-plan ; **caractérisé par** les étapes suivantes :

diviser (S301) l'image et chaque trame vidéo dans la pluralité de trames vidéo en une pluralité de blocs d'un même nombre ; et

pour chaque bloc de l'image, définir (S302) une fenêtre de sélection de bloc candidat dans chaque trame vidéo de la pluralité de trames vidéo, la fenêtre de sélection de bloc candidat couvrant au moins un bloc correspondant au bloc dans l'image, dans l'espace ;

sélectionner (S303), à l'intérieur des fenêtres de sélection de bloc candidat, une zone de taille identique au bloc dans l'image et avec son contenu le plus proche du bloc dans l'image comme bloc candidat pour remplacer ledit bloc ; et

procéder (S304) au remplacement du bloc dans l'image par le bloc candidat déterminé.

2. Procédé selon la revendication 1, dans lequel déterminer (S101, 200) un vecteur de mouvement relatif de chaque trame vidéo dans la pluralité de trames vidéo par rapport à une trame vidéo précédente comprend en outre les étapes suivantes :

diviser (S201) chaque trame vidéo en une pluralité de blocs vidéo ;

calculer (S202) un vecteur de mouvement relatif de chaque bloc vidéo dans la pluralité de blocs vidéo par rapport à un bloc vidéo correspondant dans la trame vidéo précédente ;

regrouper (S203) la pluralité de blocs vidéo dans chaque trame vidéo sur la base du vecteur de mouvement relatif de chaque bloc vidéo, de manière à déterminer une pluralité de blocs vidéo associés à l'arrière-plan dans chaque trame vidéo ; et

déterminer (S204) un vecteur de mouvement relatif de chaque trame par rapport à la trame vidéo précédente sur la base d'un vecteur de mouvement relatif de chaque bloc vidéo dans la pluralité de blocs vidéo associés à l'arrière-plan dans chaque trame.

3. Procédé selon la revendication 1, dans lequel le regroupement (S103) de tous les points de pixels correspondant à chaque point spatial est effectué sur la base d'une distribution de la densité spatiale des points de pixels dans un espace colorimétrique RVB.

4. Procédé selon la revendication 1, dans lequel le regroupement (S103) de tous les points des pixels correspondant à chaque point spatial pour obtenir des points de pixels qui sont associés à un arrière-plan comprend en outre l'étape suivante :

en résultat du regroupement pour chaque point spatial, utiliser une pluralité de points de pixels appartenant à un regroupement maximum comme points de pixels qui correspondent à chaque point spatial et sont associés à l'arrière-plan.

5. Appareil (1000) pour le traitement d'un fichier vidéo comprenant une pluralité de trames vidéo, l'appareil (1000) comprenant :

une unité de détermination de vecteur de mouvement (1010) configurée pour déterminer un vecteur de mouvement relatif de chaque trame vidéo dans la pluralité de trames vidéo par rapport à une trame vidéo précédente ;

une unité d'alignement (1020) configurée pour aligner spatialement la pluralité de trames vidéo sur la base du vecteur de mouvement relatif, de manière à déterminer les points de pixels correspondants d'un même point spatial sur chaque trame vidéo de la pluralité de trames vidéo ;

une unité de regroupement de pixels (1030) configurée pour regrouper tous les points de pixels correspondant à chaque point spatial pour obtenir des points de pixels qui sont associés à un arrière-plan ;

une unité de création d'image (1040) configurée pour créer une image associée à l'arrière-plan du fichier vidéo sur la base des points de pixels obtenus qui correspondent à chaque point spatial et sont associés à l'arrière-plan ; **caractérisé en ce qu'**il comprend :

une unité de division (1050) configurée pour diviser l'image et chaque trame vidéo de la pluralité de trames vidéo en une pluralité de blocs d'un même nombre ; et

une unité de sélection (1060) configurée pour, pour chaque bloc de l'image, définir une fenêtre de sélection de bloc candidat dans chaque trame vidéo de la pluralité de trames vidéo, la fenêtre de sélection de bloc candidat couvrant au moins un bloc correspondant au bloc dans l'image, dans l'espace ;

une unité de détermination de bloc candidat (1070) configurée pour, pour chaque bloc dans l'image, sélectionner, à l'intérieur des fenêtres de sélection de bloc candidat, une zone ayant une taille identique à celle du bloc dans l'image et dont le contenu est le plus proche du bloc dans l'image comme bloc candidat pour remplacer ledit bloc ; et
une unité de remplacement (1080) configurée pour, pour chaque bloc dans l'image, procéder au remplacement du bloc dans l'image par le bloc candidat déterminé.

6. Appareil (1000) selon la revendication 5, dans lequel l'unité de détermination de vecteur de mouvement (1010) comprend en outre :

une unité de division supplémentaire (1011) configurée pour diviser chaque trame vidéo en une pluralité de blocs vidéo ;
une unité de calcul (1012) configurée pour calculer un vecteur de mouvement relatif de chaque bloc vidéo dans la pluralité de blocs vidéo par rapport à un bloc vidéo correspondant dans la trame vidéo précédente ;
une unité de regroupement de blocs vidéo (1013) configurée pour regrouper la pluralité de blocs vidéo dans chaque trame vidéo sur la base du vecteur de mouvement relatif de chaque bloc vidéo, de manière à déterminer une pluralité de blocs vidéo associés à l'arrière-plan dans chaque trame vidéo ; et
une unité de sous-détermination (1014) configurée pour déterminer un vecteur de mouvement relatif de chaque trame par rapport à la trame vidéo précédente sur la base d'un vecteur de mouvement relatif de chaque bloc vidéo dans la pluralité de blocs vidéo associés à l'arrière-plan dans chaque trame.

7. Appareil (1000) selon la revendication 5, dans lequel l'unité de remplacement (1080) comprend en outre :

une unité d'obtention (1081) configurée pour obtenir une zone couvrant et dépassant le bloc candidat d'une zone prédéterminée depuis une trame vidéo où se situe le bloc candidat déterminé, en tant que bloc de remplacement correspondant ; et
une unité de sous-remplacement (1082), configurée pour remplacer chaque bloc de l'image par le bloc de remplacement correspondant, où une partie de chevauchement de deux blocs de remplacement adjacents est rendue sur la base d'une pondération de couleur de chaque pixel qui s'y trouve.

8. Appareil (1000) selon la revendication 6, dans lequel l'unité de sous-détermination (1014) comprend :
une unité de remplacement de valeur moyenne (10141) configurée pour utiliser une valeur moyenne de vecteurs de mouvement relatif de chaque bloc vidéo dans la pluralité de blocs vidéo associés à l'arrière-plan dans chaque trame en tant que vecteur de mouvement relatif de chaque trame par rapport à la trame vidéo précédente.

9. Appareil (1000) selon la revendication 5, dans lequel le regroupement de tous les points de pixels correspondant à chaque point spatial est effectué sur la base d'une distribution de la densité spatiale des points de pixels dans un espace colorimétrique RVB.

10. Appareil (1000) selon la revendication 5, dans lequel l'unité de regroupement de pixels (1030) comprend en outre :
une unité d'obtention de point de pixel de regroupement maximum (1031) configurée pour, dans un résultat du regroupement pour chaque point spatial, utiliser une pluralité de points de pixels appartenant à un regroupement maximum comme points de pixels qui sont associés à l'arrière-plan.

11. Appareil (1000) selon la revendication 6, dans lequel l'unité de regroupement de blocs vidéo (1013) comprend en outre :
une unité d'obtention de bloc vidéo de regroupement maximum (10131) configurée pour déterminer une pluralité de blocs vidéo qui ont été regroupés, appartiennent au regroupement maximum et adjacents dans l'espace, comme pluralité de blocs vidéo associés à l'arrière-plan.

12. Appareil (1000) selon la revendication 5, dans lequel le vecteur de mouvement relatif comprend un vecteur de mouvement dans la direction horizontale et un vecteur de mouvement dans la direction verticale.

13. Support non transitoire lisible par ordinateur comprenant un produit programme informatique, le produit programme informatique comprenant des instructions exécutables par machine qui, lorsqu'elles sont exécutées, amènent une machine à exécuter le procédé selon l'une quelconque des revendications 1 à 4 .

100

S101 Determine a relative motion vector of each video frame in the plurality of video frames relative to a preceding video frame

S102 Spatially align the plurality of video frames based on the relative motion vector, so as to determine corresponding pixel points of a same spatial point on each video frame of the plurality of video frames

S103 Cluster all pixel points corresponding to said each spatial point to obtain pixel points which correspond to said each spatial point and are associated with a background

S104 Create a picture associated with the background of the video file based on the obtained pixel points which correspond to said each spatial point and are associated with the background

Fig. 1

200

S201 Divide each video frame into a plurality of video blocks

S202 Calculate a relative motion vector of each video camera in a plurality of video blocks relative to a corresponding video block in a preceding video frame

S203 Cluster a plurality of video blocks in each video frame based on the relative motion vector of each video block to determine a plurality of video blocks associated with the background in each video frame

S204 Determine a relative motion vector of the each frame relative to the preceding video frame based on a relative motion vector of each video block in the plurality of video blocks associated with the background in the each frame

**Fig. 2**

300

```
┌──────────────────────────────────────┐
│ S301 Divide the picture and each video frame in a │
│ plurality of video frames into a plurality of blocks │
│ of the same number, respectively │
└──────────────────────────────────────┘
                    │
                    ▼
┌──────────────────────────────────────┐
│ S302 For each block in the picture, set a │
│ candidate block selection window in each video │
│ frame of the plurality of video frames, the │
│ candidate block selection window at least │
│ covering a block corresponding to the each block │
│ in space │
└──────────────────────────────────────┘
                    │
                    ▼
┌──────────────────────────────────────┐
│ S303 For each block in the picture, select, from a │
│ plurality of the selected windows for the each │
│ block, an area with a size identical to the each │
│ block and with its content closest to the each │
│ block as a candidate block for replacing the each │
│ one block │
└──────────────────────────────────────┘
                    │
                    ▼
┌──────────────────────────────────────┐
│ S304 Perform replacement based on the │
│ determined candidate block for each block in the │
│ picture │
└──────────────────────────────────────┘
```

**Fig. 3**

**Fig. 4**

Fig. 5

Fig. 6

Fig. 7

Fig. 8

**Fig. 9**

**Fig. 11**

Apparatus 1000

Motion vector determining unit 1010

First dividing unit 1011

Calculating unit 1012

Video block clustering unit 1013

Maximum cluster video block obtaining unit 10131

Sub-determining unit 1014

Average value replacing unit 10141

Aligning unit 1020

Selecting unit 1060

Pixel clustering unit 1030

Maximum cluster pixel point obtaining unit 1031

Candidate block determining unit 1070

Picture creating unit 1040

Replacing unit 1080

Obtaining unit 1081

Second dividing unit 1050

Sub-replacing unit 1082

Fig. 10

Fi g. 12

Fi g. 13

**EP 3 127 086 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003108238 A
- EP 1045591 A

- US 2011051991 A

**Non-patent literature cited in the description**

- **CHIA-KAI LIANG et al.** Proceedings of 2004 International Symposium on Intelligent Multimedia, Video and Speech processing. *The effect of digital image stabilization on coding performance,* 20 October 2004